Europäisches Patentamt

European Patent Office

Office européen des brevets

(19)

(11) Publication number: **0 004 116**
**B1**

(12) **EUROPEAN PATENT SPECIFICATION**

(45) Date of publication of patent specification: **16.02.83**

(51) Int. Cl.³: **C 08 G 18/38,**
**C 08 G 18/66**

(21) Application number: **79200110.9**

(22) Date of filing: **03.03.79**

(54) **Process for the preparation of cross-linked polyurethanes.**

(30) Priority: **04.03.78 NL 7802413**

(43) Date of publication of application:
**19.09.79 Bulletin 79/19**

(45) Publication of the grant of the patent:
**16.02.83 Bulletin 83/7**

(84) Designated Contracting States:
**BE CH DE FR GB IT NL**

(56) References cited:
**US - A - 2 901 467**
**US - A - 3 174 950**
**US - A - 3 730 923**

**The file contains technical information
submitted after the application was filed and not
included in this specification**

(73) Proprietor: **STAMICARBON B.V.**
**Postbus 10**
**NL-6160 MC Geleen (NL)**

(72) Inventor: **Frisch, Kurt Charles**
**17986 Park Lane**
**Grosse Ile, Mich. 48138 (US)**
Inventor: **Tummers, Daniel Maria Joseph**
**Rubensstraat 21**
**NL-6165 TP Geleen (NL)**
Inventor: **Te Nijenhuis, Anne**
**Dr. Schaepmanstraat 52**
**NL-6444 XZ Brunssum (NL)**

(74) Representative: **Van de Panne, Vitus Nicolaas et al,**
**Octrooibureau DSM Postbus 9**
**NL-6160 MA Geleen (NL)**

Courier Press, Leamington Spa, England

## Process for the preparation of cross-linked polyurethanes

The invention relates to a process for the preparation of a cross-linked solid or microcellular polyurethane by reacting a polyisocyanate, two or more polyols of which at least one is a trihydroxy compound acting as cross-linking agent, if desired in the presence of a catalyst and other usual additives.

It is known that cross-linked polyurethanes can be obtained by reaction of a polyisocyanate, one or more polyhydroxy compounds, and at least one trihydroxy compound acting as cross-linking agent. Cross-linking agents mostly used in this process are such compounds as trimethylolpropane or glycerol or adducts of an alkylene oxide to these compounds.

Although in this way satisfactory products can be obtained, it is of importance to have available products with enhanced physical properties, especially strength, which better retain their properties at elevated temperatures.

According to the invention a cross-linked polyurethane is characterized in that the polyols comprise

A-1 at least one polymeric polyol compound having a molecular weight between 500 and 10,000, possessing two or three hydroxyl groups per molecule,

A-2 if desired a monomeric diol having a molecular weight of from 62 up to and including 200 in an amount such that the ratio between the hydroxyl groups deriving from the said diol and the hydroxyl groups deriving from the said polymeric polyol does not exceed 5:1,

B tris-($\beta$-hydroxylpropyl)isocyanurate or its ethoxylated derivative in an amount such that the ratio between the hydroxyl groups deriving from said isocyanurate group containing polyol B to the hydroxyl groups deriving from polyol(s) 'A' is between 0.5:1 and 5:1.

By using tris-($\beta$-hydroxypropyl)-isocyanurate or its ethoxylated derivative as cross-linking agent it is possible to obtain products exhibiting enhanced physical properties at room temperature, particularly tensile strength and tear strength, and which at elevated temperature show reduced loss in weight and strength.

Tris-($\beta$-hydroxylpropyl)-isocyanurate can be obtained by reacting propylene oxide with cyanuric acid, preferably in the absence of a catalyst. The ethoxylated derivative thereof can be obtained by reacting from 1 to about three moles of ethylene oxide with one mole of tris-($\beta$-hydroxypropyl)-isocyanurate, so that one to three hydroxypropyl groups are converted to hydroxyethyl-oxypropyl groups. The ethoxylated compound is slightly more reactive due to the presence of primary hydroxyl groups. Its use is especially advantageous in the preparation of polyurethanes by reaction-injection-moulding techniques.

From the US-patents 3,174,950 and 3,730,923 it is known to use tris-(hydroxyethyl)isocyanurate for the preparation of respectively polyurethane foam and coatings.

However no indication is given in these patents about the usefulness of tris-($\beta$-hydroxypropyl)isocyanurate for the preparation of solid or microcellular polyurethanes.

According to the invention the tris-($\beta$-hydroxypropyl)-isocyanurate is used in an amount that the ratio between the hydroxyl groups deriving from this compound and the hydroxyl groups deriving from the polymeric polyols, (and any diols which may be present) is between 0.5:1 and 5.0:1.

With the lower of these ratios the degree of cross-linking is relatively low, and with a ratio of about 5:1 the products show such strong cross-linking that they have low flexibility and impact resistance. Optimum properties are obtained if the ratio referred to above is between 0.8:1 and 3.5:1.

At least part of the hydroxyl groups is provided by the polymeric polyols. These compounds have molecular weights between 500 and 10,000 and contain 2—3 hydroxyl groups per molecule, the triols being especially suitable in injection-moulding techniques.

Thus in the preparation of cast elastomers and foams, a polymeric diol with a molecular weight between 500 and 2500 is preferably used. For injection-moulding compositions, the use of a polymeric triol with a molecular weight of between 2500 and 10,000, more particularly between 4000 and 8000, is preferred.

In a preferred embodiment, the said polymeric polyol A-1 is one or more polyols of the group of polyoxyalkene glycols contain $C_2$—$C_4$ oxyalkene units, addition products of a $C_2$—$C_3$ alkene oxide to a trihydroxy compound, polylactone-diols and -triols derived from $C_5$—$C_{12}$ lactones, hydroxylterminated polyesters, hydroxyl group-containing polyacrylates and hydroxyl group-containing graft polymers containing chains based on acylonitrile and/or styrene.

These suitable polymeric polyols include the polyoxyalkylene glycols con--taining $C_2$—$C_4$ oxyalkylene units, e.g. polyethyleneglycol, polypropyleneglycol, polytetramethyleneglycol and random- or block-copolymers of ethylene oxide and propylene oxide, polylactone polyols derived from a $C_5$—$C_{12}$ lactone, as may be obtained by polymerizing caprolactone, valerolactone or oenantholactone in the presence of a polyfunctional initiator, di-hydroxyl-terminated polyesters, polyhydroxyl group-containing polyacrylates, hydroxyl group-containing graft polymers containing polymer chains based on e.g. acrylonitrile, styrene or combinations thereof, and addition products of ethylene oxide or propylene oxide to a polyfunctional, and preferably trifunctional, hydroxyl compound, for example glycerol or trimethylolpropane. Polyesters which may be used as polymeric polyols may be obtained by reacting

one or more $C_4$—$C_{12}$ aliphatic and/or aromatic carboxyl acids, e.g. adipic acid, azelaic acid, phthalic acid or terephthalic acid, with one or more $C_2$—$C_{12}$ aliphatic and/or cycloaliphatic diols, e.g. ethylene glycol, diethylene glycol, 1,4-butane diol, 1,6-hexane diol, propylene glycol, or 1,4-(hydroxymethyl)-cyclohexane, in proportions to provide di-hydroxyl-terminated polyesters.

In some embodiments of the invention a low molecular-weight diol that can act as chain lengthener is used in addition to the polymeric polyol, i.e. dihydroxy compounds having a molecular weight of from 62 up to and including 200. Examples are aliphatic unbranched diols e.g. ethylene glycol, 1,4-butanediol and 1,6-hexanediol, branched diols e.g. 1,2-propyleneglycol and 2,2-dimethyl-1,4-butanediol, low-molecular-weight polyalkylene glycols e.g. diethylene glycol, triethylene glycol, or cycloaliphatic diols such as 1,4-(hydroxy-methyl)-cyclohexane or bis-hydroxymethyl-hydroquinone. Preferably the low-molecular-weight diol used is an aliphatic diol with 2—6 carbon atoms. In which cases a low-molecular-weight diol is applied, and in what amounts, will be explained below.

The polyisocyanates used in the process of the invention include aromatic, aliphatic or cycloaliphatic diisocyanates in pure or crude form, e.g. toluene diisocyanates, 4,4'diisocyanate diphenyl methane, polyarylene polyphenyl isocyanates, isophorone diisocyanate, and hexamethylene diisocyanate. If use is made of a crude polyisocyanate containing on average more than two isocyanate groups in the molecule, the amount of cross-linking agent may be lessened. Also suitable are the polyfunctional isocyanates obtained by catalytic trimerisation of a diisocyanate or reaction of one mole of a trihydroxy compound or water with three moles of a diisocyanate. Such a quantity of diisocyanate is used that the overall NCO/OH ratio is 1.00:1 to 1.05:1 e.g. about 1:1.

One or more catalysts accelerating the isocyanate reaction are usually used, for example the polyamino compounds, e.g. triethylene diamine, and tin-containing compounds, e.g. dibutyltin diacetate or dilaurate.

In addition conventionally used additives may be present, such as release agents, fillers, pigments, flame extinguishers, and, if microcellular polyurethane is being prepared, blowing agent and surfactants.

The invention particularly relates to solid elastomeric polyurethanes and microcellular polyurethanes.

The polyurethane elastomers can be prepared by mixing the polyisocyanate, the polymeric diol component, the cross-linking agent and the catalyst and hardening them at elevated temperature, e.g. between 75°C and 150°C, preferably between 100°C and 125°C, in a preferably preheated mould. It is also possible first to convert the polyisocyanate and the polymeric polyol, and optionally part of the isocyanurate triol at an NCO/OH ratio of at least 2:1 into a prepolymer containing isocyanate groups, and then to mix this prepolymer with the other reaction components. For such prepolymers the use of a polymeric diol with a molecular weight between 600 and 2000 is preferred. Further, it is possible previously to convert the tris-($\beta$-hydroxypropyl)-isocyanurate or the ethoxylated derivative thereof, into a prepolymer by reacting it with the polyisocyanate. In the preparation of the polyurethane elastomers no or only a small amount of low-molecular-weight diol is used. The ratio between the hydroxyl groups deriving from the low-molecular-weight diol and the hydroxyl groups deriving from the polymeric polyol is preferably smaller than 0.5:1. In order to obtain a favourable cross-link density the ratio between the hydroxyl groups deriving from the isocyanurate triol and the hydroxyl groups deriving from the other polyhydroxy component(s) is preferably between 1:1 and 3.5:1.

In another procedure for carrying out the invention the various components are reacted in one or more steps in the presence of a relatively small amount of blowing agent. This results in the production of a microcellular polyurethane foam. The proportions and reaction conditions are so chosen that the foam has a density of at least 200 kg/m³, preferably over 400 kg/m³. In most cases the amount of blowing agent is between 2 and 10% wt., calculated to the total quantity of reactants. The blowing agent may be any of the compounds customarily used for the purpose that form a gas under the reaction conditions. The best known are the compounds comprising 1—3 carbon atoms that contain chlorine and/or fluorine. In addition, it is preferred to add one or more of the usual surfactants, in particular silicone mixed polymers, in an amount of between 0.1 and 5% wt, based upon the total amount of reactants.

In the preparation of microcellular polyurethane foam the use of tris-($\beta$-hydroxypropyl)-isocyanurate or its ethoxylated derivative has been found to bring an additional advantage, viz. better utilization of the blowing agent. Consequently, only relatively small amounts of blowing agent need be used. The use of a low-molecular-weight diol in the preparation of microcellular polyurethane foam is advantageous. In this case preferably such an amount of low-molecular-weight diol is used that the ratio between the hydroxyl groups deriving from this diol and the hydroxyl groups deriving from the polymeric polyol is between 0.5:1 and 3.0:1, more in particular between 1.0:1 and 2.0:1. Further, the cross-link density may be somewhat lower than in the polyurethane elastomers. In this case it is preferable to apply a ratio of between 0.8:1 and 2.5:1, more in particular between 1.0:1 and 2.0:1, between the hydroxyl groups deriving from the isocyanurate triol and the hydroxyl groups deriving from the other hydroxyl component(s). The microcellular polyurethane foams can be prepared by mixing all components and then foaming and hardening them in a mould, heated or unheated. Another good method is first to react the polymeric polyol, and optionally part of the total amount of cross-linking

3

agent, with an excess amount of polyisocyanate, and next to add the remaining amount of the cross-linking agent, the low-molecular-weight diol, and further additives.

In reaction-injection-moulding compositions, the use of the ethoxylated isocyanurate triol and of a high molecular-weight triol is advantageous. In these compositions, the ratio between the hydroxyl groups deriving from the polymeric polyol and those deriving from the isocyanurate triol is between 0.1:1 and 1:1, preferably between 0.25:1 and 0.9:1.

According to conventional practice, all the components must be free of water, and the various reactions are carried out as much as possible with exclusion of water, unless water is intentionally present as a blowing agent.

The invention will be explained by means of the following examples, without being restricted thereto. In these examples all amounts given are in grams, unless otherwise indicated.

## Example I

Microcellular polyurethane foam was prepared in the following manner.

An isocyanate component was prepared by reacting for 3 hours under nitrogen and at a temperature of 70°C toluenediisocyanate (80% 2,4 compound and 20% 2,6 compound), poly-(oxytetra-methylene)-glycol with a molecular weight of 2062, and tris-($\beta$-hydroxypropyl)-isocyanurate (hereinafter be referred to as THPIC-13). A hydroxyl component was prepared by mixing THPOC-13 with 1,4-butanediol at 100°C. The two components were then mixed, and a surface-active silicone preparation (DC-190 of Dow Corning USA), $CCl_3F$ as blowing agent, and triethylene diamine (20% solution in dimethylaminoethanol) were incorporated in the mixture.

The mixture was transferred to a mould and heated for 12 hours at 100°C. Thereafter each product was conditioned for at least 24 hours at 20°C and 50% rel. humidity.

The amounts used were:

| Composition | | A | B |
|---|---|---|---|
| THPIC-13 | | 440 | 330 |
| polymeric diol | NCO component | 2062.5 | 3094 |
| TDI | | 1218 | 1218 |
| THPIC-13 | OH component | 396 | 396 |
| 1,4-butanediol | | 180 | 180 |
| NCO component | | 164 | 169.3 |
| OH component | | 25 | 21 |
| DC-190 | | 2 | 2 |
| $CCl_3F$ | | 10 | 10 |
| catalyst | | 0.02 | 0.02 (B-1) or 0.05 (B-2) |

## Example II

In the way described in Example I microcellular polyurethane foams C and D were prepared. In both cases the isocyanate component used was an isocyanate product on the basis of 4,4'diisocyanate-diphenylmethane (P-90, from Davidson Rubber, USA, NCO content 22.8%, equivalent number 184.2). Foam D is outside the scope of the invention, as it contained as cross-linking agent a trimethylolpropane-propylene oxide adduct (Pluracol-TP 340 (RTM), BASF-Wyandotte, USA, equivalent number 101). The amounts used were:

| Composition | | C | D |
|---|---|---|---|
| THPIC-13 | | 330 | — |
| Pluracol TP-340 | OH-components | — | 303 |
| polymeric diol | | 1031.2 | 1031.2 |
| 1,4-butanediol | | 67.5 | 67.5 |
| OH-component | | 111.7 | 109.6 |
| P-90 (isocyanate) | | 83.2 | 83.2 |
| DC-190 | | 2.0 | 2.0 |
| $CCl_3F$ | | 10.0 | 10.0 |
| catalyst | | — | — |

The microcellular polyurethane foams obtained as described in Examples I and II were subjected to a number of tests. The testing methods are described elsewhere. The results have been compiled in Table 1.

Comparison of products C and D shows that application of THPIC-13 leads to a better product. Products B-1 and B-2 differ in that B-1 was hardened in a preheated mould, B-2 in a cold mould. Foam B-2 had a slightly better skin.

TABLE 1

| Foam | A | B-1 | B-2 | C | D |
|---|---|---|---|---|---|
| density, kg/m³ | 439 | 472 | 493 | 408 | 469 |
| hardness, Shore A | 83 | 60 | 60 | 83 | 75 |
| elasticity, Bashore | 27 | 27 | 27 | 29 | 22 |
| tensile strength, N/mm² | 3.58 | 2.48 | 2.54 | 3.79 | 2.13 |
| elongation, % | 130 | 190 | 190 | 80 | 150 |
| tear strength, mNm | 525 | 438 | 490 | 613 | 525 |
| compressive strength, Nmm² | | | | | |
| at 10% deflection | 1.44 | 0.47 | 0.49 | 1.84 | 0.43 |
| at 25% deflection | 1.86 | 0.75 | 0.74 | 2.13 | 0.74 |
| at 50% deflection | 3.46 | 1.48 | 1.44 | 3.49 | 1.55 |
| compressive strength after humid aging, % difference | | | | | |
| at 10% deflection | −3 | −21 | −22 | +9 | −6 |
| at 25% deflection | −2 | −20 | −22 | +9 | +1 |
| at 50% deflection | −5 | −13 | −16 | +14 | +12 |
| compressive strength after dry aging, % difference | | | | | |
| at 10% deflection | +19 | −12 | −6 | +29 | 0 |
| at 25% deflection | +19 | −11 | +1 | +32 | +4 |
| at 50% deflection | +14 | 0 | +12 | +36 | −3 |

### Example III

A number of polyurethane elastomers was prepared by mixing a polymeric diol at 140°C with a cross-linking agent and next admixing a polyisocyanate (P-90, as used in Example II). Hereafter an amine catalyst (PC-41 of Abbott Laboratories, USA) and dibutyltin dilaurate were admixed, and hardening was effected for 30 minutes in a press and for 12 hours in a furnace.

The amounts used are shown in Table 2.

NIAX-34-28 (RTM) is a polyol (from Union Carbide, USA) containing styrene and acrylonitrile units and having an equivalent number of 2040 and an OH number of 27.5. Pluracol P-380 (RTM, BASF-Wyandotte) is a polyol having an equivalent number of 2235 and an OH number of 25.1. THPIC-16 is an addition product of 6 moles of propylene oxide to one mole of cyanuric acid, having a hydroxyl number of 376 and an equivalent number of 149.2.

All elastomers were conditioned for at least a week at 20°C and 50% rel. hum., after which a number of mechanical properties were determined at room temperature and elevated temperature. The results have been compiled in Tables 3 and 4. In general, the elastomers prepared with THPIC-13 (4—1 through 4—4 and 4—9 through 4—12) have slightly better characteristics. In all cases the elastomers show very good results in the sagging test.

### TABLE 2

| Elasto-mer | NIAX-34-28 | Pluracol P-380 | THPIC-13 | THPIC-16 | P-90 | amine cat. | tin cat. |
|---|---|---|---|---|---|---|---|
| 4—1 | 200 | — | 20 | — | 52.75 | 0.3 | 0.02 |
| 4—2 | 200 | — | 20 | — | 78.36 | 0.5 | 0.02 |
| 4—3 | 200 | — | 30 | — | 69.29 | 0.3 | 0.02 |
| 4—4 | 200 | — | 30 | — | 98.99 | 0.5 | 0.02 |
| 4—5 | 200 | — | — | 20 | 43.14 | 0.3 | 0.02 |
| 4—6 | 200 | — | — | 20 | 61.63 | 0.5 | 0.02 |
| 4—7 | 200 | — | — | 30 | 56.39 | 0.3 | 0.02 |
| 4—8 | 200 | — | — | 30 | 80.55 | 0.5 | 0.02 |
| 4—9 | — | 200 | 20 | — | 51.14 | 0.3 | 0.02 |
| 4—10 | — | 200 | 20 | — | 73.05 | 0.5 | 0.02 |
| 4—11 | — | 200 | 30 | — | 68.28 | 0.3 | 0.02 |
| 4—12 | — | 200 | 30 | — | 97.55 | 0.5 | 0.02 |
| 4—13 | — | 200 | — | 20 | 42.13 | 0.3 | 0.02 |
| 4—14 | — | 200 | — | 20 | 60.19 | 0.5 | 0.02 |
| 4—15 | — | 200 | — | 30 | 54.77 | 0.3 | 0.02 |
| 4—16 | — | 200 | — | 30 | 78.26 | 0.5 | 0.02 |

TABLE 3

| elastomer | 4—1 | 4—2 | 4—3 | 4—4 | 4—5 | 4—6 | 4—7 | 4—8 |
|---|---|---|---|---|---|---|---|---|
| hardness, Shore D | 35 | 38 | 42 | 55 | 26 | 38 | 32 | 50 |
| tensile strength at 25°C, N/mm² | 11.99 | 10.22 | 16.15 | 20.06 | 10.57 | 6.94 | 12.84 | 10.15 |
| tensile strength at 150°C, N/mm² | 1.97 | 1.68 | 1.60 | 2.41 | 1.84 | 2.03 | 1.61 | 1.97 |
| elasticity modulus at 50%, N/mm² | 2.57 | 4.99 | 6.07 | 14.59 | 1.81 | 3.26 | 2.22 | 4.88 |
| rupture resistance, N/mm² | 11.99 | 10.22 | 16.15 | 20.06 | 10.57 | 6.94 | 12.84 | 10.15 |
| elongation of 25°C, % | 243 | 152 | 235 | 100 | 335 | 165 | 306 | 116 |
| sagging at 25°C, cm | 3.93 | 3.48 | 2.23 | 0.004 | 4.28 | 2.56 | 4.07 | 2.50 |
| sagging at 120°C, cm | 5.71 | 5.43 | | | | | | |

TABLE 4

| elastomer | 4—9 | 4—10 | 4—11 | 4—12 | 4—13 | 4—14 | 4—15 | 4—16 |
|---|---|---|---|---|---|---|---|---|
| hardness, Shore D | 18 | 28 | 30 | 36 | 16 | 25 | 22 | 33 |
| tensile strength at 25°C, N/mm² | 3.44 | 6.91 | 6.03 | 5.88 | 2.02 | 3.35 | 3.31 | 3.38 |
| tensile strength at 150°C, N/mm² | 1.07 | 1.69 | 1.39 | 1.90 | 1.08 | 1.74 | 1.50 | 1.84 |
| elasticity modulus at 50%, N/mm² | 1.07 | 3.35 | 3.35 | 4.63 | 0.69 | 1.44 | 1.56 | 2.88 |
| rupture resistance, N/mm² | 3.44 | 6.91 | 6.03 | 5.88 | 2.02 | 3.35 | 3.31 | 3.38 |
| elongation at 25°C, % | 280 | 160 | 131 | 100 | 223 | 130 | 150 | 57 |
| sagging at 25°C | 5.54 | 2.32 | 1.35 | 1.86 | 6.30 | 2.64 | 2.88 | 1.97 |
| sagging at 120°C | 5.64 | 4.83 | 3.98 | 2.97 | 6.61 | 4.05 | 5.06 | 4.57 |

Example IV

A number of polyurethane elastomers were prepared by first preparing a prepolymer from 2 moles of diisocyanate and 1 mole of polymeric diol, reacting for 3 hours under nitrogen at 70°C. Thereafter, an amount of prepolymer was mixed intensively at 100°C with the equivalent amount of tris-($\beta$-hydroxypropyl)-isocyanurate (THPIC-13), and subsequent to degassing and addition of a catalyst (dibutyltin dilaurate) the mixture was transferred to a preheated mould treated with a release agent. Whilst the pressure was slowly raised to 700 bar, the mixture was heated for 30 minutes at 100°C (MDI elastomers) or 110°C (TDI elastomers), and next further hardened in a furnace at 100°C for 10 and 4 hours, respectively. The polymeric diols used were poly(oxytetramethylene)-glycols having molecular weights of 980 (Polymeg 1000, (RTM) of (Quaker Oats, (USA) and 662 (Polymeg 650 (RTM)), a polycaprolactone diol having a molecular weight of 1958 (Niax D-560, (RTM), Union Carbide, USA), and a polyester glycol having a molecular weight of 2000 (Multrathene R-144 (RTM), Mobay, USA). The diisocyanates used were toluenediisocyanate (TDI, 80% 2,4 and 20% 2,6) and

8

4,4′diisocyanatediphenylmethane (MDI).

All elastomers were conditioned for at least a week at 20°C and 50% rel. hum. Subsequently a number of mechanical and physical properties were determined. The results of this determination have been compiled in Table 5.

Note: In all experiments as described in all examples an equivalent number of 110 instead of 101 was erroneously applied for THPIC-13. Consequently, a small excess of hydroxyl groups was used in all cases. Although slightly insufficient hardening was hereby induced, the properties of all products were satisfactory.

TABLE 5

| elastomer | 5—1 | 5—2 | 5—3 | 5—4 | 5—5 | 5—6 | 5—7 |
|---|---|---|---|---|---|---|---|
| Polymeg 1000 | x | | | | x | | |
| Polymeg 650 | | x | | | | | |
| Niax D-560 | | | x | | | x | |
| Multrathane R-144 | | | | x | | | x |
| TDI | x | x | x | x | | | |
| MDI | | | | | x | x | x |
| hardness, Shore A | 62 | 66 | 57 | 59 | 68 | 58 | 60 |
| tensile strength at 25°C, N/mm² | 10.51 | 27.00 | 20.33 | 21.78 | 22.20 | 18.59 | 22.21 |
| tensile strength after humid aging | 16.80 | 33.00 | 22.41 | 33.01 | 22.20 | 17.99 | 25.48 |
| tensile strength after dry aging | 14.03 | 24.39 | 16.24 | 24.40 | 21.26 | 18.63 | 26.08 |
| tear strength, mNm | 420 | 2452 | 525 | 1296 | 770 | 297 | 525 |
| elasticity, Bashore | 13 | 25 | 53 | 55 | 18 | 36 | 33 |
| modulus at 100% N/mm² | 1.86 | 3.58 | 1.00 | 2.20 | 2.41 | 1.52 | 1.45 |
| modulus at 300% N/mm² | 6.40 | 26.90 | 2.41 | 5.79 | 11.65 | 3.31 | 4.82 |
| TGA, weight loss of 5% at ... °C | 303 | 302 | 307 | 310 | 326 | 329 | 328 |
| 10% at ... °C | 315 | 317 | 326 | 326 | 338 | 342 | 338 |
| 20% at ... °C | 328 | 333 | 345 | 353 | 350 | 365 | 366 |

Example V

In the way described in Example III two polurethane elastomers were prepared from poly(oxytetramethylene)-glycol having a molecular weight of 2062, toluene diisocyanate, and THPIC-13 (elastomer 6-U) or — for comparison and falling outside the scope of the invention — trimethylol propane, as cross-linking agent (elastomer 6-V).

The properties are shown below:

# 0 004 116

| elastomer | 6-U | 6-V* |
|---|---|---|
| tensile strength, N/mm² | 12.40 | 6.89 |
| tear strength, mNm | 700 | 175 |
| elongation, % | 620 | 400 |

\* not according to the invention

## Example VI

A number of polyurethane elastomers was prepared by mixing a high-molecular-weight triol with a triol containing an isocyanurate group, a catalyst, and in some experiments, with butanediol. The mixtures were degassed in vacuo and subsequently the isocyanate was added with intensive mixing. The mixtures were hardened for 30 minutes in a preheated steel mould at 100°C. Thereafter the mouldings were released from the mould and subjected to further hardening for 6 hours at 100°C. The samples to be used for measuring the physical properties were conditioned for 7 days at room temperature and 50% rel. humidity. The high-molecular-weight triol was a polyoxypropylene triol with terminal oxyethylene groups, grafted with styrene and acrylonitrile. The molecular weight was 5968.1, the equivalent weight 1989.4, and the hydroxyl number 28.2. The polyol containing the isocyanurate group was tris-($\beta$-hydroxy-propyl) isocyanurate (THPIC-13) or an addition product of ethylene oxide to this polyol (THEPIC-13EO). The latter polyol had a molecular weight of 476.4, an equivalent weight of 155.8, and a hydroxyl number of 360. The polyisocyanate was the P-90 also used in Example IV, which was added in such an amount that the NCO/OH ratio was 1.05.

The catalysts used were 0.0075% wt. of a tertiary amine (Polycat 41(RTM)) and 0.1 wt. of dibutyltin dilaurate.

TABLE 6

| experiment no. | 1 | 2 | 3 | 4 |
|---|---|---|---|---|
| high m.w. triol | 85 | 85 | 85 | 85 |
| THPIC-13 | 15 | 7,5 | — | — |
| THPIC-13 EO | — | — | 15 | 7,5 |
| butanediol | — | 7,5 | — | 7,5 |
| hardness, Shore A | 92 | 96 | 83 | 95 |
| hardness, Shore D | 51 | 62 | 33 | 54 |
| tensile strength, N/mm² | 14.0 | 22.2 | 11.3 | 20.1 |
| elongation, % | 170 | 220 | 205 | 240 |
| elasticity modulus at 100% N/mm² | 8.4 | 12.1 | 5.1 | 8.8 |

## Example VII

A number of elastomers were prepared using ethoxylated tris-($\beta$-hydroxypropyl) isocyanurate (THEPIC-13EO) as the isocyanurate triol. This product has a molecular weight of 467,4 and an equivalent weight of 155.8.

The elastomers were prepared by a hand casting technique. The THEPIC was blended with a polymeric polyol and the blend was evacuated in order to remove entrapped air and moisture. Thereafter the appropriate amount of 4.4'diisocyanatodiphenylmethane (MDI) was added to form a prepolymer. This prepolymer was then mixed with butanediol and the mixture was cast in a mould, cured in the mould at 100°C for 30 minutes and postcured for 16 hours at 100°C. Samples were conditioned for 7 days at 25°C and 50% relative humidity before testing. The results are gathered in table 7.

The components used were:

Experiment 8—1: prepolymer using 3 moles of MDI, 1 equivalent of THEPIC and 2 equivalents of poly(oxytetramethylene) glycol having a mol weight of 980 and an equivalent weight of 490. An amount of butanediol producing a NCO/OH ratio of 1.05 was used.

10

# 0 004 116

Experiment 8—2: prepolymer using 3 moles of MDI, 2 equivalents of THEPIC and 2 equinalents of the same poly(oxytetramethylene)glycol, cured with butanediol at a NCO/OH ratio of 1.05.

Experiment 8—3: a prepolymer using 3 moles of MDI, 1 equivalents of THEPIC and 2 equivalents of a polyester glycol with a molecular weight of 2000 and an equivalent weight of 1000 (Multrathane R-144 of Mobay Chemical Corp). Again the prepolymer was cured with butanediol at a NCH/OH ratio of 1.05.

Experiment 8—4: a prepolymer using 4 moles of MDI, 2 equivalents of THEPIC and 2 equivalents of the same polyesterglycol, cured with butanediol at a NCO/OH ratio of 1.05.

TABLE 7

| elastomer | 8—1 | 8—2 | 8—3 | 8—4 |
|---|---|---|---|---|
| hardness, Shore A | 85 | 96 | 75 | 73 |
| tensile strength, 25°C in N/mm$^2$ | 31.9 | 32.1 | 26.8 | 30.8 |
| modulus at 100% N/mm$^2$ | 2.83 | 10.2 | 1.8 | 2.1 |
| modulus at 300% N/mm$^2$ | 11.3 | — | 5.3 | 7.5 |
| elongation, % | 380 | 280 | 600 | 500 |

## Claims

1. A process for the preparation of a cross-linked elastomeric solid polyurethane or a cross-linked microcellular polyurethane by reacting a polyisocyanate, two or more polyols of which at least one is a trihydroxy compound acting as cross-linking agent, if desired in the presence of a catalyst and other usual additives, characterized in that the polyols comprise

A-1 at least one polymeric polyol compound having a molecular weight between 500 and 10,000, possessing two or three hydroxyl groups per molecule,

A-2 if desired a monomeric diol having a molecular weight of from 62 up to and including 200 in an amount such that the ratio between the hydroxyl groups deriving from the said diol and the hydroxyl groups deriving from the said polymeric polyol does not exceed 5:1,

B tris-($\beta$-hydroxylpropyl)isocyanurate or its ethoxylated derivative in an amount such that the ratio between the hydroxyl groups deriving from said isocyanurate group containing polyol B to the hydroxyl groups deriving from polyol(s) 'A' is between 0.5:1 and 5:1.

2. A process according to Claim 1, characterized in that the ratio between the hydroxyl groups deriving from the tris-($\beta$-hydroxypropyl)-isocyanurate or its ethoxylated derivative and the hydroxyl groups deriving from the polyol(s) 'A' is between 0.8:1 and 3.5:1.

3. A process according to any of Claims 1 to 2, characterized in that the said polymeric polyol A-1 is one or more polyols of the group of polyoxyalkylene glycols containing $C_2$—$C_4$ oxyalkylene units, addition products of a $C_2$—$C_3$ alkene oxide to a trihydroxy compound, polylactone-diols and -triols derived from $C_5$—$C_{12}$ lactones, hydroxyl terminated polyesters, hydroxyl group-containing polyacrylates and hydroxyl group-containing graft polymers containing chains based on acrylonitrile and/or styrene.

4. A process according to any of Claims 1 to 3, characterized in that a solid elastomeric polyurethane is prepared using a polymeric polyol A-1 having a molecular weight between 500 and 2500.

5. A process according to Claim 4, characterized in that a solid elastomeric polyurethane is made with the use of such an amount of tris-($\beta$-hydroxypropyl)-isocyanurate or its ethoxylated derivative that the ratio of the hydroxyl groups deriving from this isocyanurate triol 'B' and the hydroxyl groups deriving from the polyol(s) 'A' is between 1.0 and 3.5, and the quantity of low molecular-weight diol A-2 is such that the ratio between the hydroxyl groups deriving from this diol and the hydroxyl groups derived from the polymeric polyol A-1 does not exceed 0.5:1.

6. Process according to Claims 1—3, characterized in that a cross-linked microcellular polyurethane having a density of at least 400 kg/m$^3$ is made by carrying out the reaction in the presence of a blowing agent, using a value of between 0.5:1 and 3.0:1 for the ratio of the hydroxyl groups deriving from the low molecular-weight diol A-2 to the hydroxyl groups deriving from the polymeric polyol A-1, and a value of betwen 0.8:1 and 2.5:1 for the ratio of the hydroxyl groups deriving from the isocyanurate triol B and the hydroxyl groups deriving from the polyols A-1 and A-2 together.

11

7. Process according to Claim 6, characterized in that a value of between 1.0:1 and 2:1 is applied for the ratio between the hydroxyl groups deriving from the low-molecular-weight diol A-2 and the hydroxyl groups deriving from the polymeric polyol A-1, respectively, and a value of between 1.0:1 and 2.0:1 is applied for the ratio between the hydroxyl groups deriving from the isocyanurate triol B and the hydroxyl groups deriving from the polyols A-1 and A-2 together.

8. Process according to Claims 1—3, characterized in that the polymeric polyol A-1 is a polymeric trihydroxyl compound having a molecular weight of between 2500 and 10,000, and in that the quantity of the isocyanuarate triol B is such that the ratio between the hydroxyl groups deriving from the polymeric trihydroxyl compound A-1 and the hydroxyl groups deriving from the isocyanurate triol B is between 0.1:1 and 1.0:1.

9. Process according to Claim 8, characterized in that a polymeric trihydroxyl compound A-1 having a molecular weight of between 4,000 and 8,000 is used.

10. Objects made of cross-linked elastomeric solid polyurethane or cross-linked microcellular polyurethane, obtained by the process according to any one or more of the Claims 1—9.

**Revendications**

1. Un procédé pour la préparation d'un polyuréthane massif élastomère réticulé ou d'un polyuréthane microcellulaire réticulé en faisant réagir un polyisocyanate, deux polyols ou plus dont au moins un est un composé trihydroxylé servant d'agent de réticulation, éventuellement en présence d'un catalyseur et d'autres additifs usuels, caractérisé en ce que les polyols comprennent:

A-1) au moins un polyol polymère ayant un poids moléculaire compris entre 500 et 10 000, possédant deux ou trois groupes hydroxyle par molécule,

A-2) éventuellement un diol monomère ayant un poids moléculaire de 62 à 200 inclusivement en quantité telle que le rapport entre les groupes hydroxyle provenant de ce diol et les groupes hydroxyle provenant du polyol polymère ne dépasse pas 5:1,

B) de l'isocyanurate de tris(bêta-hydroxypropyle) ou son dérivé éthoxylé en quantité telle que le rapport entre les groupes hydroxyle provenant de ce polyol B contenant un groupe isocyanurate et les groupes hydroxyle provenant du ou des polyols "A" soit compris entre 0,5:1 et 5:1.

2. Un procédé selon la revendication 1, caractérisé en ce que le rapport entre les groupes hydroxyle provenant de l'isocyanurate de tris-(bêta-hydroxypropyle) ou de son dérivé éthoxylé et les groupes hydroxyle provenant du ou des polyols "A" est compris entre 0,8:1 et 3,5:1.

3. Un procédé selon l'une des revendications 1 et 2, caractérisé en ce que le polyol polymère A-1 consiste en un ou plusieurs polyols choisis parmi des polyalcoylèneglycols contenant des mailles oxyalcoylène en $C_2$—$C_4$, des produits d'addition d'un oxyde d'alcène en $C_2$—$C_3$ à un composé trihydroxylé, des polylactone-diols et -triols dérivés de lactones en $C_5$—$C_{12}$, des polyesters à groupes terminaux hydroxyle, des polyacrylates contenant des groupes hydroxyle et des copolymères greffés contenant des groupes hydroxyle comprenant des chaînes à base d'acrylonitrile et/ou de styrène.

4. Un procédé selon l'une quelconque des revendications 1 à 3, caractérisé en ce qu'on prépare un polyuréthane élastomère massif en utilisant un polyol polymère A-1 ayant un poids moléculaire compris entre 500 et 2500.

5. Un procédé selon la revendication 4, caractérisé en ce qu'on prépare un polyuréthane élastomère massif en utilisant une quantité d'isocyanurate de tris-(bêta-hydroxypropyle) ou de son dérivé éthoxylé telle que le rapport des groupes hydroxyle provenant de cet isocyanurate triol "B" aux groupes hydroxyle provenant du ou des polyols "A" soit compris entre 1,0 et 3,5 et la quantité de diol de poids moléculaire peu élevé A-2 est telle que le rapport entre les groupes hydroxyle provenant de ce diol et les groupes hydroxyle provenant du polyol polymère A-1 ne dépasse pas 0,5:1.

6. Procédé selon l'une des revendications 1 à 3, caractérisé en ce qu'on prépare un polyuréthane microcellulaire réticulé ayant une masse volumique d'au moins 400 kg/m³ en conduisant la réaction en présence d'un agent gonflant, en utilisant une valeur comprise entre 0,5:1 et 3,0:1 pour le rapport des groupes hydroxyle provenant du diol de poids moléculaire peu élevé A-2 aus groupes hydroxyle provenant du polyol polymère A-1, et une valeur comprise entre 0,8:1 et 2,5:1 pour le rapport des groupes hydroxyle provenant de l'isocyanurate triol B aux groupes hydroxyle provenant des polyols A-1 et A-2 ensemble.

7. Procédé selon la revendication 6, caractérisé en ce qu'on utilise une valeur comprise entre 1,0:1 et 2:1 pour le rapport entre les groupes hydroxyle provenant du diol de poids moléculaire peu élevé A-2 et les groupes hydroxyle provenant du polyol polymère A-1, respectivement, et on utilise une valeur comprise entre 1,0:1 et 2:1 pour le rapport entre les groupes hydroxyle provenant de l'isocyanurate triol B et les groupes hydroxyle provenant des polyols A—1 et A2 ensemble.

8. Procédé selon l'une des revendications 1 à 3, caractérisé en ce que le polyol polymère A-1 est un composé trihydroxylé polymère ayant un poids moléculaire compris entre 2500 et 10 000 et en ce que la quantité de l'isocyanurate triol B est telle que le rapport entre les groupes hydroxyle provenant du composé trihydroxylé polymère A-1 et les groupes hydroxyle provenant de l'isocyanurate triol B soit compris entre 0,1:1 et 1,0:1.

9. Procédé selon la revendication 8, caractérisé en ce qu'on utilise un composé trihydroxylé polymère A-1 ayant un poids moléculaire compris entre 4 000 et 8 000.

10. Objets formés de polyuréthane massif élastomère réticulé ou de polyuréthane microcellulaire réticulé, obtenus par un procédé selon une ou plusieurs quelconques des revendications 1 à 9.

**Patentansprüche**

1. Ein Verfahren zur Herstellung eines vernetzten, elastomeren, festen Polyurethans oder eines vernetzten, mikrozellularen Polyurethans durch Reaktion eines Polyisocyanats mit einem oder mehreren Polyolen, von denen mindestens eines eine Trihydroxyverbindung ist, die als Vernetzungsmittel fungiert, falls erwunscht in Anwesenkeit eines Katalysators oder anderer gebräuchlicher Zusätze, dadurch gekennzeichnet, dass die Polyole enthalten

A-1 mindestens eine polymeren Polyol-Verbindung mit einem Molekulargewicht zwischen 500 und 10.000 und mit zwei oder drei Hydroxylgruppen je Molekül,

A-2 falls erwünscht ein monomeres Diol mit einem Molekulargewicht von 62 bis einschliesslich 200 in einer solchen Menge, dass das Verhältnis zwischen den aus dem genannten Diol abgeleiteten Hydroxylgruppen und den aus dem genannten polymeren Polyol abgeleiteten Hydroxylgruppen 5:1 nicht übersteigt.

B. Tris-($\beta$-Hydroxylpropyl-)Isocyanurat oder dessen, äthoxyliertes Derivat, und zwar in einer solchen Menge, dass das Verhältnis zwischen den aus der genannten, Polyol B enthaltenden Isocyanatgruppe abgeleiteten Hydroxylgruppen und dem aus dem (den) Polyol(en) 'A' abgeleiteten Hydroxylgruppen zwischen 0,5:1 und 5:1 liegt.

2. Verfahren nach Anspruch 1, dadurch gekennzeichnet, dass das Verhältnis zwischen den aus dem Tris-($\beta$-Hydroxylpropyl-)Isocyanurat oder seinen äthoxylierten Derivaten abgeleiteten Hydroxylgruppen und den aus dem (den) Polyol(en) 'A' abgeleiteten Hydroxylgruppen zwischen 0,8:1 und 3,5:1 liegt.

3. Verfahren nach einem der Ansprüche 1 oder 2, dadurch gekennzeichnet, dass das genannte polymere Polyol A-1 gewählt wird aus einem oder mehreren Polyolen der Gruppe von Polyoxyalkylen-Glykolen besteht, die $C_2$—$C_4$ Oxyalkylen-Einheiten enthalten, aus Additionsprodukten eines $C_2$—$C_3$-Alkenoxyds an einer Trihydroxy-Verbindung, aus von $C_5$—$C_{12}$-Lactonen abgeleitete Polyacton-Diole und -Triole, Hydroxylbegrenzte Polyester, Hydroxylgruppen enthaltenden Polyacrylaten sowie Hydroxylgruppen enthaltenden Pfropfpolymere die Ketten auf der Basis von Acrilonitril und/oder Styren enthalten.

4. Ein Verfahren nach einem der Ansprüche 1 bis 3, dadurch gekennzeichnet, dass ein festes, elastomeres Polyurethan unter Verwendung eines polymeren Polyols A-1 hergestellt wird, welches ein Molekulargewicht zwischen 500 und 2500 hat.

5. Ein Verfahren nach Anspruch 4, dadurch gekennzeichnet, dass ein festes, elastomeres Polyurethan hergestellt wird unter Verwendung einer solchen Menge von Tris-($\beta$-Hydroxylpropyl-)Isocyanurat oder eines äthoxylierten Derivats, das das Verhältnis zwischen den aus diesem Isocyanurattriol 'B' abgeleiteten Hydroxylgruppen und den aus dem (den) Polyol(en) 'A' abgeleiteten Hydroxylgruppen zwischen 1,0 und 3,5 beträgt und die Menge des Diols A-2 mit niedrigem Molekulargewicht so ist, dass das Verhältnis zwischen den aus diesem Diol abgeleiteten Hydroxylgruppen und den aus dem polymeren Polyol A-1 abgeleiteten Hydroxylgruppen 0,5:1 nicht übersteigt.

6. Verfahren nach den Ansprüchen 1—3, dadurch gekennzeichnet, dass ein vernetztes, mikrozellulares Polyurethan mit einer Dichte von mindestens 400 kg/m³ durch Reaktion in Gegenwart eines Treibmittels hergestellt wird, unter Verwendung eines Wertes von 0,5:1 und 3,0:1 für das Verhältnis zwischen der aus dem Diol A-2 mit niedrigem Molekulargewicht abgeleiteten Hydroxylgruppen und den aus dem polymeren Polyol A-1 abgeleiteten Hydroxylgruppen sowie einem Wert von 0,8:1 und 2,5:1 für das Verhältnis zwischen den aus dem Isocyanurattriol B abgeleiteten Hydroxylgruppen und den aus den Polyolen A-1 und A-2 zusammen abgeleiteten Hydroxylgruppen.

7. Verfahren nach Anspruch 6, dadurch gekennzeichnet, dass ein Wert zwischen 1,0 :1 und 2 :1 für das Verhältnis zwischen den aus dem Diol A-2 mit niedrigem Molekulargewicht abgeleiteten Hydroxylgruppen und den aus dem polymeren Polyol A-1 abgeleiteten Hydroxylg uppen verwendet wird und ein Wert zwischen 1,0:1 und 2,0:1 für das Verhältnis zwischen den aus dem Isocyanurattriol B abgeleiteten Hydroxylgruppen und den aus den Polyolen A-1 und A-2 zusammen abgeleiteten Hydroxylgruppen verwendet wird.

8. Verfahren nach den Ansprüchen 1—3, dadurch gekennzeichnet, dass es sich bei dem polymeren Polyol A-1 um eine polymere Trihydroxyl Verbindung handelt mit einem Molekulargewicht zwischen 2.500 und 10.000 und dass die Menge des Isocyanurattriols B so bemessen ist, dass das Verhältnis zwischen den aus der polymeren Trihydroxylverbindung A-1 abgeleiteten Hydroxylgruppen und den aus dem Isocyanurattriol B abgeleiteten Hydroxylgruppen zwischen 0,1:1 und 1,0:1 beträgt.

9. Verfahren nach Anspruch 8, dadurch gekennzeichnet, dass eine polymere Trihydroxylverbindung A-1 mit einem Molekulargewicht zwischen 4.000 und 8.000 verwendet wird.

10. Gegenstände, hergestellt aus vernetztem, elastomerem, festem Polyurethan oder vernetztem, mikrozellularem Polyurethan, hergestellt mit dem Verfahren gemäss einem oder mehreren der Ansprüche 1—9.